# EUROPEAN PATENT APPLICATION

(11) **EP 2 876 091 A1**
(43) Date of publication of application: **27.05.2015**
(21) Application number: 14193431.5
(22) Date of filing: 17.11.2014
(51) Int. Cl.: C03B 20/00, C03B 19/06, C03B 19/12, C03B 19/14

(54) **Furnace for sintering silica soot bodies**

(30) Priority: 18.11.2013 GB 201320280
(71) Applicant: Heraeus Quartz Uk Limited, Wallsend Tyne and Wear NE28 6DD (GB)
(72) Inventor: Coapes, Richard Benjamin, Benton, NE12 8BL (GB); Mundy, Alan, Newcastle-upon-Tyne, NE20 9JB (GB); Sayce, Ian George, Stocksfield, NE43 7NX (GB)
(74) Representative: Hanson, William Bennett

(57) **Abstract**

Apparatus for sintering a hollow cylindrical body (1) of porous synthetic silica comprises a hollow mandrel (2) for supporting the body in a horizontal position. The mandrel is housed within a vacuum furnace (5) having heating elements (4) arranged to surround the body circumferentially along its entire length. A method of sintering a hollow cylindrical body (1) of porous synthetic silica is also disclosed.

## Description

### Background to the Invention

High purity synthetic vitreous silica is used in the manufacture of optical fibres, in high quality optics and for critical applications in the semiconductor industry. While there are a number of potential manufacturing routes, one of the most important involves deposition of silica soot from a synthesis flame fed with a suitable precursor, to form a porous silica body. An example of such a process is the so-called outside vapour deposition process (OVD), where the synthesis flame from one or more burners is caused to deposit silica on a cylindrical mandrel which may be later removed leaving a hollow cylindrical body of porous silica soot. Similar porous silica bodies may also be generated by alternative techniques, including sol-gel, slip-casting, powder pressing etc. These bodies may comprise substantially pure synthetic silica, or alternatively the silica may be deliberately doped, either by addition of appropriate precursors to the synthesis flame, or by subsequent treatment, for example by immersion in a solution of dopant ions in a solvent, and subsequent removal of the solvent. The present invention relates to apparatus for sintering such porous bodies of pure or doped synthetic silica.

The heat treatment and subsequent sintering of hollow cylindrical porous silica bodies have generally been undertaken in two separate stages. The heat treatment, at temperatures typically in the range 800 - 1100°C, may include dehydration (e.g. by heating under reduced pressure), purification (e.g. by heating in an atmosphere containing chlorine), and doping (e.g. by heating in atmosphere containing fluorine, i.e. fluorine, silicon tetrafluoride, sulphur hexafluoride, carbon tetrafluoride or other fluorocarbons etc.), or reduction (e.g. by heating in an atmosphere containing hydrogen, carbon monoxide, ammonia or the vapour of a siloxane or silazane etc.). The sintering process takes place at higher temperature, typically in the range 1300 - 1600°C, and involves shrinkage of the silica as it forms a pore-free glass.

In the past, these processes have been undertaken in vertical furnaces of various designs, sometimes in separate furnaces, sometimes in linked furnaces (e.g. US 5713979) sometimes in a single furnace (e.g. US 4741748). It has been important to optimise the dimensions of the sintered product and to accommodate the dimensional changes which occur during the shrinkage and potential slumping of the soot body during sintering. Generally the products have been solid or hollow cylindrical bodies of high aspect ratio, intended for subsequent redraw to rod or tube products or for the manufacture of optical fibres. During the sintering process, a solid porous soot body contracts in all directions, and the sintered glass product may need to be extended by subsequent stretching prior to drawing to fibre. Where the porous body is a hollow cylinder, and the product hollow ingot is to be drawn to tube, the axial shrinkage which might occur on sintering may be disadvantageous, and it may be beneficial to support the hollow body by appropriate fixtures during sintering. One such method is described in US 5665132, in which a hollow cylindrical silica soot body is supported vertically on a support rod of carbon-fibre reinforced carbon, with a sleeve of graphite which passes through the bore of the cylinder, and terminates with a graphite plate. The sintering operation involves initial sintering of the upper end of the soot body by passing the assembly upwards through a narrow hot zone. As the top of the porous body sinters it shrinks onto the graphite sleeve, and on continuing upward this region cools, and thereafter the body is suspended from its upper end, while the remainder of the body is progressively zone sintered.

In such zone heating furnaces, the body is passed through a hot-zone, permitting localised heating of the body to such a temperature that consolidation occurs to transparent pore-free glass. Such furnaces are costly, and require moving parts, which may include seals to atmosphere, which are subject to wear. They require a building of adequate height, and lifting gear to raise the body over the furnace and to accommodate the body beneath the hot-zone, i.e. the building must be of height typically > 3L where L is the length of the body to be treated. Also, there is not only both axial and radial shrinkage but, if the body is suspended, there is a deformation due to the weight of material hanging below the softened material in the hot-zone. If the body is supported from the base, a comparable distortion occurs, due to the weight of material above the softened glass in the hot-zone. Such deformation can be avoided only if the body is supported from both ends, which brings additional engineering problems.

While zone-sintering of a vertically oriented body is a technology in widespread use, there are some references to "whole-body" sintering, in which the porous silica soot body is held within a furnace which provides an extended hot zone, with substantially uniform temperature over the entire body. Such a method is described in US 2007/0271964, in which a vertically oriented soot body is supported by means of a porous and permeable tube or mandrel of graphite, and constrained at both ends. Provision is made to evacuate the gas from the furnace chamber and, separately, to extract gas from the bore of the porous support tube. Heated in a first phase in an atmosphere of chlorine and helium, the porous body may be dehydrated and purified. Later, the pressure is reduced and temperature is raised to soften and vitrify the soot body, which sinters from the outer surface, and shrinks down onto the evacuated support tube. Having a lower coefficient of thermal expansion than the silica, this tube may be withdrawn once the sintered body has cooled, leaving a cylindrical ingot of glass with bore defined by the tubular mandrel.

The above heat-treatment and sintering processes have generally been undertaken while the soot body has been supported on a vertical axis, but the present inventors have found it advantageous to sinter a horizontally oriented soot body. Regarding sintering on a horizontal axis, JP 7-084326 B2 concerns the sintering, not of a hollow cylinder, but of a solid porous cylindrical soot body, prepared by VAD (Vapour-phase Axial Deposition). This is first pre-sintered at 1300°C in air or nitrogen, while suspended vertically in a first furnace from a fused quartz dummy rod or handle. Subsequently the body, still mounted on this handle, is moved to a second furnace and fed through a horizontal muffle furnace where sintering takes place in an atmosphere of helium. As the sintered glass emerges from the hot zone it is suggested that it can be supported by sliding contact with the wall of the furnace, so that distortion due to the cantilever may thus be avoided. While the practicality of such an approach may be open to question, it would necessitate two high temperature furnaces, and would be entirely unsuitable for sintering the much larger hollow bodies of the present invention.

US 4842628 describes an alternative approach in which a hollow cylindrical soot body is placed in a horizontally-disposed graphite tube, which is inductively heated within a vacuum furnace chamber. The graphite tube is capable of rotation. Again processing takes place in two stages. In a first stage the soot body is dehydrated and pre-sintered by heating under vacuum, or in helium at reduced pressure, at a temperature of 1250 - 1400°C. Then, under vacuum, the temperature is raised to 1500 - 1720 °C while the graphite tube is rotated at progressively increasing speed. The soot body thus vitrifies while in rolling contact with the graphite tube. It is suggested that it may be beneficial to place a loosely fitting graphite rod or tube within the bore of the porous soot body, as this will make rolling contact with the interior of the body and may improve the uniformity of heating. Construction for large scale use of such a rotary furnace is expensive, and the rolling contact between the soot and the graphite parts is undesirable, owing to the delicate nature of the porous soot body.

### Summary of the Invention

With the aim of alleviating these disadvantages, the present invention provides apparatus for sintering a hollow cylindrical body of porous synthetic silica, comprising a hollow mandrel of uniform cross section for supporting the body in a horizontal position, the mandrel being housed within a vacuum furnace having heating elements arranged to surround the body circumferentially along its entire length and optionally at its ends.

The furnace may have a steel wall. The heating elements may comprise refractory materials, e.g. graphite.

The mandrel may be cylindrical and may be of refractory material such as graphite or silicon carbide. In one embodiment, the mandrel is porous. In another embodiment, the mandrel has holes. Such mandrels allow for an escape of gas during dehydration and sintering and by any reaction of silica with the material of the mandrel.

The mandrel may be provided with electrical heating means. It may be rotatable to minimise distortion of the softened body. The mandrel may be provided with fixtures to prevent axial shrinkage of the body.

The furnace may be provided with a plurality of said mandrels, each for supporting a silica soot body.

Control means may be provided for heating different parts of the body at different rates, for example for maintaining a higher temperature in a central region of the furnace, so that the central region of the silica body sinters before the ends. Alternatively or additionally, the ends of the mandrel and/or end caps of the silica body may be provided with thermal insulation. Another measure that may be taken is to provide a low-friction material, such as graphite tape, between the ends of the mandrel and the body to facilitate an axial contraction of the body as it sinters. These measures may be beneficial in yielding a sintered body of improved axial uniformity. In another embodiment the power input into the heating elements may be adjusted to provide a vertical thermal gradient in the hot-zone, such that the underside of the soot body sinters before the upper side, and thus distortion of the circular circular cross-section of the body may be minimised.

The invention also provides a method of sintering a hollow cylindrical body of porous synthetic silica, comprising supporting the body on a hollow mandrel in a vacuum furnace in which heating elements are disposed on all sides of the body, and heating the body by means of the elements to a sintering temperature.

To facilitate rapid heating, it may be advantageous to heat the body in an atmosphere of a selected inert gas, e.g. nitrogen or helium, e.g. at a pressure of 10⁴ -10⁵ Pa (ca. 0.1 - 1.0 atm).

To facilitate dehydration of the body it may be useful to heat for a predetermined time under reduced pressure at a temperature below that which causes the pores of the body to close to provide an impervious surface layer, which occurs at a temperature in the range 1100 - 1300°C. This maximum dehydration temperature may be reached progressively, i.e. the temperature cycle may incorporate one or more holds at lower temperature.

Additionally, or alternatively, the body may be heated in an atmosphere which includes a reactive gas, e.g. gas containing chlorine or fluorine, silicon tetrafluoride, carbon tetrafluoride or other fluorocarbon gases, hydrogen, ammonia, a siloxane or a silazane etc., and thus to effect dehydration, purification, doping or partial reduction of the product glass.

Final sintering may be effected under an atmosphere of helium or under vacuum, e.g. at a pressure of 1 to 100 Pa.

During sintering, the mandrel and the soot body may be rotated.

Where the heating elements form a structure having faces, the method may include controlling the temperature of each face independently.

Also, the method may comprise maintaining a higher temperature in a central region of the furnace than at end regions. Additionally, the method may comprise maintaining a vertical thermal gradient in the hot zone as a means to minimise deviation of the cross-section of the product from circularity.

Controlled axial shrinking of the silica soot body may be facilitated, to yield a more uniform cylindrical product.

### Brief Description of the Drawings

Embodiments of the invention will now be described in more detail, by way of example only, with reference to the accompanying drawings, in which:
Figure 1 is a schematic longitudinal sectional view of a furnace according to the invention, and
Figure 2 is a schematic transverse sectional view of an alternative furnace.

### Detailed Description of Particular Embodiments

The furnace of the invention is for sintering a large diameter body, which may be intended for the manufacture of large diameter hollow cylinders of glass, possibly to be further worked to give large diameter transparent tubing, or possibly to be machined to give a number of synthetic silica glass rings, as required for supporting silicon wafers during semiconductor processes. The manufacture of such soot bodies has been described in WO 2012/136678 A1 and WO 2012/004389 A1.

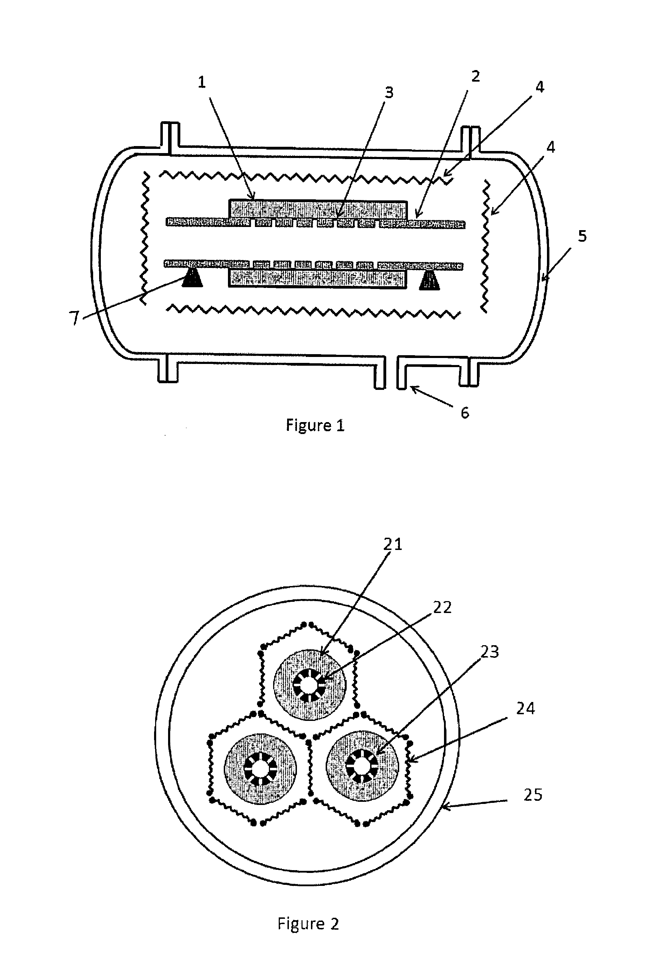

A furnace according to the invention is shown schematically in Figure 1. The porous hollow silica soot body 1 is supported on a hollow mandrel 2 of graphite or other suitable refractory material. The mandrel is either porous or provided with suitably formed perforations 3 to permit escape of gases during the sintering operation. The furnace is equipped with electrical heating elements 4, both around the body to be sintered and at both ends, so as to provide a substantially uniform temperature throughout the hot zone or optionally a controlled minor temperature difference, should that be helpful, e.g. in achieving optimal shape in the sintered product. The elements may form a cuboid or other uniform cross-sectional structure, having separately-controlled heating of each face. The mandrel is supported on a graphite structure e.g. V-blocks 7, within the hot zone defined by the heating elements 4. The mandrel, carrying the soot body, may be supported on a removable graphite assembly comprising V-blocks 7 mounted on a graphite table 8. This table, together with V-blocks, mandrel and soot body, may be loaded into the furnace when one of its ends, including elements 4, is opened. Within the furnace, the table is supported on graphite mounts 9, such that the axis of the soot body 1 is approximately central within the hot-zone defined by the heating elements.

The assembly is contained with a chamber 5 which may be evacuated, and of which the steel walls may be cooled, e.g. by water-cooling. The chamber walls are suitably insulated, with insulation material (not shown), and the chamber is provided with a facility 6 for inlet and outlet of gas via gas supplies and vacuum pumps (not shown).

While such an arrangement of resistively heated elements has proved convenient and economical, it is understood that the heat source could alternatively be provided by an inductively heated cylindrical element made for example from graphite, surrounded and heated by susception from a water-cooled metal coil. Under these circumstances the wall of the vacuum chamber may comprise a vacuum envelope made from a suitable non-conducting material, for example vitreous silica.

To facilitate rapid heating, the body can be heated in an atmosphere of inert gas, e.g. nitrogen or helium, e.g. at a pressure of 10⁴ - 10⁵ Pa (ca. 0.1 - 1.0 atm).

To facilitate dehydration of the body it may be useful to heat for a predetermined time under reduced pressure at a temperature below that which causes the pores of the body close to provide an impervious surface layer, which occurs typically at a temperature in the range 1100 - 1300°C, and the temperature cycle may incorporate one or more holds at lower temperature.

Alternatively, the body may be heated in an atmosphere which includes a reactive gas, to effect dehydration, purification or doping or partial reduction of the product glass.

During sintering (consolidation to transparent, pore-free glass) and to facilitate rapid pore closure it may be useful to effect final sintering under an atmosphere of helium, or preferably under vacuum e.g. at a pressure of 1 - 100 Pa.

It may be advantageous to rotate the mandrel and with it the soot body during the process, and thereby ensure more uniform heat treatment, and minimal distortion of the softened body due to gravity.

Measures may be taken to ensure that the ends of the body do not sinter first, and thus become adhered to the mandrel - if this happens, a "bone-shaped" ingot may result due to subsequent radial, but not axial shrinkage of the central regions of the porous body. Solutions to this potential problem include: (a) differential heating - i.e. maintaining a higher temperature in the central region of the furnace, relative to the ends, so that the central region of the soot body sinters before the ends; (b) thermal insulation of the ends of the supporting mandrel, and even the end-caps of the soot body, to ensure that the sintering and consequent shrinkage of the ends of the body does not occur significantly before that of the central region; and (c) ensuring a low friction interface between the soot body and the mandrel, especially at the ends, e.g. by wrapping the mandrel with graphite tape or similar medium.

Facilitating controlled axial shrinkage may be beneficial since it yields a more uniform cylindrical product, and may be advantageous in that a long thin soot body (permitting greater length and surface area for rapid deposition of soot) can yield a shorter body of greater wall thickness than otherwise to be expected, suitable, for example, for machining to annular shapes as required for semiconductor jigs.

Alternatively, in some circumstances it may be advantageous to provide suitable fixtures on the mandrel to which the soot body sinters and thus to ensure that the body sinters only radially, and not axially, so that it maintains its length.

Figure 1 shows a furnace designed for treating a single porous body but, in further embodiments, it may be possible to treat multiple bodies. A possible arrangement for treating three bodies simultaneously is shown in Figure 2. The soot bodies 21 are again supported on hollow tubular mandrels 22, which may be made from graphite or other suitable refractory material. The mandrels are either porous or provided with suitably formed perforations 23 to permit escape of gases during the sintering operation. The furnace is equipped with electrical heating means 24, preferably arranged around each body to be sintered, so that each experiences a similar and substantially uniform temperature, or optionally a controlled temperature distribution, and the assembly is again mounted within a suitable vacuum chamber 25.

The invention provides a cost effective solution to the problem of dehydration and sintering of large diameter hollow soot bodies of potentially varied dimensions, since with minimal modifications it can employ a large diameter vacuum furnace of conventional design, as employed in a wide variety of high temperature and metallurgical processes.

In view of the mandrel supporting the silica soot body, there is no need to attach means to suspend or otherwise locate or support the body, as required when using a conventional vertical furnace.

After sintering, the body may be machined to a desired shape or otherwise treated to remove any partially sintered or impure materials, by acid etching, by sand-blasting etc.

Distortion due to gravity may be avoided by rotating the mandrel and ingot during the sintering operation, but for many applications a static mandrel is acceptable.

Under appropriate thermal conditions, any distortion of the body during sintering due to flow under the influence of gravity may be minimised by ensuring that the forces causing radial and axial shrinkage predominate. However, such distortion which does occur may lead to minor siding and/or ovality. This may be reduced by imposing a controlled vertical thermal gradient in the furnace, by appropriate adjustment of power input into the various heating elements.

Because of the possibility of such minor distortions, the method is of most practical use for applications where such distortion is of least significance. One such application is the manufacture of large diameter cylinders which are subsequently machined to the desired geometry e.g. (a) to provide a hollow ingot to be used for making annular products, such as semiconductor jigs or (b) to provide a relatively thin-wall mother tube, to be resized, e.g. via a glass-working lathe, to provide a thin wall transparent tube for semiconductor or similar applications, or redrawn to tube of smaller diameter, for use as a lamp envelope or other application. For this purpose it may be desirable to machine the outer surface, and to hone the bore of the ingot prior to acid cleaning and resizing or redraw.

Alternatively, the sintered cylinder may be cut along its length. It may then be unrolled to provide large sized rectangular ingot or plate, or used to provide multiple strips of glass for subsequent processing, e.g. homogenisation (for pure or doped - e.g. titanium-doped silica).

In the interests of process efficiency it may be desirable to incorporate means for rapid gas cooling of the furnace and its contents after completion of the sintering operation.

### Example

A cylindrical body of porous high purity synthetic silica soot was made by outside vapour deposition on a mandrel made from stainless steel. The approximate dimensions were as follows; outside diameter 480 mm, inside diameter 273 mm, and overall length 1760 mm. The density was approximately 0.6 g/cm3 and weight 92.8 kg. This body was mounted on a tubular graphite mandrel of outside diameter 260 mm, inside diameter 210 mm and length 2200 mm. This was provided with eleven sets of radially drilled holes (each set 3 holes of diameter 6 mm) which allowed escape of gaseous species during the dehydration and sintering operation. The mandrel was supported within the chamber of the furnace, and in this example the mandrel and soot were not rotated, And the power fed to the heating elements was such that the temperature throughout the hot zone was substantially uniform.

The furnace pressure was reduced to 5x10⁻² mbar (5.0 Pa), then heated to 500°C over 1 hour, and held at this temperature for a further hour. The temperature was then raised to 1150°C over the next 1.5 hours, and held at this temperature for 24 hours. During this time the pressure rose somewhat, due to the escape of water vapour, and then declined asymptotically to 5.5 x 10⁻³ mbar (0.55 Pa). Then, over a period of 1 hour, the temperature was raised to 1500°C and held for 1 hour to effect sintering to pore-free glass. After cooling to 1070°C over 2.5 hours, the ingot was held at this temperature for 4 hours. The furnace was then allowed to cool to 930°C at which point nitrogen was introduced to bring the pressure up to ambient, and rapid cooling resulted. The furnace was opened at a temperature of 100°C.

The approximate dimensions of the product ingot were as follows: outside diameter 335 mm, inside diameter 263 mm and overall length 1275 mm. The maximum eccentricity of the bore was approximately 6 mm, and this could be rectified by honing. The glass was transparent and free from bubbles, with OH content 10 - 20 ppM determined by measuring the IR absorption according to the method of D. M. Dodd et al. ("Optical determinations of OH in fused silica", J. Appl. Physics (1966), p. 3911).

Where this description and the appended claims refer to the silica soot body as "cylindrical", it is to be understood that the body will not, in general, be an exact cylinder, but will be elongate and of substantially circular cross-section

## Claims

1. Apparatus for sintering a hollow cylindrical body (1) of porous synthetic silica, comprising a hollow mandrel (2) for supporting the body in a horizontal position, the mandrel being housed within a vacuum furnace (5) having heating elements (4) arranged to surround the body circumferentially along its entire length.

2. Apparatus according to claim 1, incorporating additional heating elements (4) at ends of the mandrel (2).

3. Apparatus according to claim 1 or 2, wherein the heating elements (4) comprise refractory elements, e.g. of graphite.

4. Apparatus according to any of claims 1 to 3, wherein the mandrel (2) is cylindrical.

5. Apparatus according to any preceding claim, wherein the mandrel (2) is of graphite or silicon carbide.

6. Apparatus according to any preceding claim, wherein the mandrel (2) is porous or provided with holes.

7. Apparatus according to any preceding claim, wherein the mandrel is provided with electrical heating means.

8. Apparatus according to any preceding claim, wherein the mandrel is rotatable.

9. Apparatus according to any preceding claim, wherein the mandrel is provided with fixtures to prevent axial shrinkage of the body.

10. Apparatus according to any preceding claim, including a plurality of said mandrels (22), each for supporting a said silica body (21).

11. Apparatus according to any preceding claim, wherein a low-friction material is provided between the ends of the mandrel and the body.

12. A method of sintering a hollow cylindrical body (1) of porous synthetic silica, comprising supporting the body on a hollow horizontally-oriented mandrel (2) in a vacuum furnace (5) in which heating elements (4) are disposed surrounding the body, and heating the body (1) by means of the elements to a sintering temperature.

13. A method according to claim 12, including heating the body (1) in an atmosphere of a selected inert gas, e.g. nitrogen or helium.

14. A method according to claim 12 or 13, including heating the body (1) for a predetermined time under reduced pressure at a maximum dehydration temperature below that which causes the pores of the body to close to provide an impervious surface layer.

15. A method according to any one of claims 12 to 14, including heating the body (1) in an atmosphere which includes a reactive gas selected from a gas containing chlorine or fluorine, silicon tetrafluoride, a fluorocarbon gas, hydrogen, ammonia, a siloxane or a silazane.
